# EUROPEAN PATENT APPLICATION

(11) **EP 4 122 665 A1**
(43) Date of publication of application: **25.01.2023**
(21) Application number: 21770710.8
(22) Date of filing: 04.03.2021
(51) Int. Cl.: B29B 11/16, B29K 101/10

(54) **METHOD FOR PRODUCING SHEET MOLDING COMPOUND AND METHOD FOR PRODUCING MOLDED ARTICLE**

(30) Priority: 19.03.2020 JP 2020049229
(71) Applicant: DIC Corporation, Tokyo 174-8520 (JP)
(72) Inventor: HITOMI, Kazutoshi, Takaishi-shi, Osaka 592-0001 (JP)
(74) Representative: TBK
(86) International application number: PCT/JP2021/008322
(87) International publication number: WO 2021/187123

(57) **Abstract**

Provided is a method for producing a sheet molding compound including an aging step for thickening a sheet-like resin compound. The method includes applying a load of 0.2 to 50 g/cm² to at least part of the sheet-like resin compound for 1 hour or more under a condition of an internal temperature of 20 to 120°C in the aging step. A sheet molding compound obtained from this method for producing a sheet molding compound and its molded article have excellent carbon fiber impregnability and the like and can thus suitably be used for the exteriors, structures, and the like of automotive components, railway vehicle components, aerospace vehicle components, ship components, housing equipment components, sports components, light vehicle components, construction and civil engineering components, OA equipment, and the like.

## Description

### Technical Field

The present invention relates to a method for producing a sheet molding compound and a method for producing a molded article.

### Background Art

What is called FRP, in which thermosetting resins are reinforced with fiber reinforcing materials, are used in many fields, including industrial parts, housing components, and automotive components. Fiber-reinforced resin composite materials, in which thermosetting resins such as epoxy resins and unsaturated polyester resins are reinforced with carbon fibers serving as the fiber reinforcing material, have attracted attention for their features including superior heat resistance and mechanical strength while being light in weight, and their use has expanded in various structure applications. A sheet molding compound (hereinafter may be abbreviated as an "SMC") is widely used because discontinuous fibers are used as the fiber reinforcing material, and thus compared to continuous fibers, the applicability of molding shapes is wider, end materials can be reused, and different-material component insert can be performed, thus providing a wider range of productivity and design applicability.

For the purpose of improving the appearance and strength of molded articles obtained from such an SMC, improvements in the moldability and impregnability of the SMC are being studied (refer to PTL 1, for example). However, this method for producing an SMC using pressure rolls while being heated has the problem of insufficient impregnability in production with a high viscosity resin and a high reinforcing fiber content.

### Citation List

### Patent Literature

PTL 1: Japanese Unexamined Patent Application Publication No. 2004-35714

### Summary of Invention

### Technical Problem

An object of the present invention is to provide a method for producing a sheet molding compound with excellent fiber impregnability regardless of a fiber content. Solution to Problem

The inventors of the present invention have found out that a method for producing a sheet molding compound having a specific aging step can achieve the object to complete the present invention.

Specifically, the present invention relates to a method for producing a sheet molding compound including an aging step for thickening a sheet-like resin compound. The method includes applying a load of 0.2 to 50 g/cm² to at least part of the sheet-like resin compound for 1 hour or more under a condition of an internal temperature of 20 to 120°C in the aging step.

### Advantageous Effects of Invention

A sheet molding compound obtained from the present invention and its molded article have excellent carbon fiber impregnability and the like and can thus suitably be used for the exteriors, structures, and the like of automotive components, railway vehicle components, aerospace vehicle components, ship components, housing equipment components, sports components, light vehicle components, construction and civil engineering components, OA equipment, and the like.

### Description of Embodiments

The method for producing an SMC of the present invention is a method for producing a sheet molding compound having an aging process for thickening a sheet-like resin compound, the method applying a load of 0.2 to 50 g/cm² to at least part of the sheet-like resin compound for 1 hour or more under a condition of an internal temperature of 20 to 120°C in the aging step.

The sheet-like resin compound before the aging step is obtained by a known method for producing an SMC. It can be obtained by applying a resin composition to carrier films placed above and below so as to have a uniform thickness, scattering a fiber reinforcing material to one resin composition applied face, holding the fiber reinforcing material between the resin compositions on the carrier films placed above and below, then passing the whole body through impregnation rolls, and applying pressure thereto to impregnate the fiber reinforcing material with the resin composition, for example. For the carrier films, polyethylene films, polypropylene films, laminated films of polyethylene and polypropylene, polyethylene terephthalate, nylon, or the like can be used.

Examples of the resin in the resin composition include thermosetting resins such as epoxy resins, vinyl ester resins, vinyl urethane resins, unsaturated polyester resins, phenolic resins, melamine resins, and furan resins. In terms of mechanical properties such as strength after molding, epoxy resins, vinyl ester resins, and vinyl urethane resins are more preferred. These resins can be used alone or used in combination of two or more.

The viscosity of the resin composition preferably has a viscosity ratio (V₃₀/V₂₀) between a viscosity V₂₀ (m·Pas) at 20°C and a viscosity V₃₀ (m·Pas) at 30°C of 0.5 to 0.9 in view of more improving the impregnability of the SMC.

The resin composition can contain diluents, curing agents, curing accelerators, polymerization inhibitors, fillers, low shrinkage agents, thermoplastic resin particles, mold release agents, thickeners, thinners, pigments, antioxidants, plasticizers, fire retardants, antibacterial agents, UV stabilizers, storage stabilizers, reinforcing materials, and photocuring agents, for example, as components other than the resin.

The fillers include inorganic compounds and organic compounds, which can be used in order to adjust the properties such as strength, elastic modulus, impact strength, and fatigue endurance of molded articles.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow balloon, alumina, glass powder, aluminum hydroxide, white limestone, zirconium oxide, antimony trioxide, titanium oxide, molybdenum dioxide, and iron powder.

Examples of the organic compounds include natural polysaccharide powders such as cellulose and chitin and synthetic resin powders. As the synthetic resin powders, organic powders containing hard resins, soft rubbers, elastomers or polymers (copolymers) or particles having a multilayer structure such as a core-shell type structure can be used. Specific examples thereof include particles made of butadiene rubber and/or acrylic rubber, urethane rubber, silicone rubber, or the like, polyimide resin powder, fluororesin powder, and phenolic resin powder. These fillers can be used alone or used in combination of two or more.

Examples of the mold release agents include zinc stearate, calcium stearate, paraffin wax, polyethylene wax, carnauba wax, and fluorine-based compounds. Preferred examples thereof include fluorine compounds and paraffin wax. These mold release agents can be used alone or used in combination of two or more.

Examples of the thickeners include metal oxides and metal hydroxides such as magnesium oxide, magnesium hydroxide, calcium oxide, and calcium hydroxide and acrylic resin-based fine particles, which can be selected as appropriate depending on the handling properties of a fiber-reinforced molding material of the present invention. These thickeners can be used alone or used in combination of two or more.

The resin composition is obtained by mixing and dispersing together the components described above using a mixing machine such as an ordinary mixer, an intermixer, a planetary mixer, a roll mill, a kneader, or an extruder.

As the fiber reinforcing material, fibers cut into a length of 2.5 to 50 mm are used. Fibers cut into a length of 5 to 40 mm are more preferred because in-mold flowability during molding and the appearance and mechanical properties of molded articles improve further.

Examples of the fiber reinforcing material include glass fiber, carbon fiber, silicon carbide fiber, pulp, hemp, cotton, nylon, polyester, acrylic, polyurethane, polyimide, and polyamide fiber containing aramid such as Kevlar or Nomex. Among these, carbon fiber is preferred because high-strength molded articles can be obtained.

As the carbon fiber, various types of ones such as polyacrylonitrile-based one, pitch-based one, and rayon-based one can be used. Among these, polyacrylonitrile-based one is preferred because high-strength carbon fibers can be easily obtained.

The number of filaments of a fiber bundle used as the carbon fibers is preferably 1,000 to 60,000 because resin impregnability and the mechanical properties of the molded articles improve further.

The content of the fiber reinforcing material in the components of the SMC of the present invention is preferably in a range of 25 to 80% by mass, more preferably in a range of 40 to 70% by mass, and particularly preferably 45 to 65% by mass because the mechanical properties of obtained molded articles improve further. If the fiber content is too low, high-strength molded articles are not necessarily obtained. If the carbon fiber content is too high, resin impregnability to the fibers may be insufficient, resulting in bulging of molded articles and failure to obtain high-strength molded articles.

The carbon fibers in the SMC of the present invention are impregnated into the resin with their fiber directions being random.

In the aging step, a load of 0.2 to 50 g/cm² is required to be applied to at least part of the sheet-like resin compound for 1 hour or more under a condition of an internal temperature of the sheet-like resin compound of 20 to 120°C.

If the internal temperature is lower than 20°C, a viscosity reduction does not occur and impregnation is insufficient; if the internal temperature is higher than 120°C, the reaction of a hardener gives a higher viscosity, resulting in insufficient impregnation. The internal temperature is preferably 30 to 100°C and more preferably 40 to 90°C because impregnability improves further.

The temperature increase rate to increase the internal temperature of the sheet-like resin compound is preferably 1 to 15°C/min and more preferably 2.5 to 15°C/min because the impregnability of the SMC improves further.

The load is preferably 1 g/cm² or more and more preferably 3 g/cm² or more because resin penetration into the thickness direction is further promoted and is preferably 40 g/cm² or less and more preferably 30 g/cm² or less because excessive resin flow is prevented, and a fiber content in the SMC can be more easily controlled.

Examples of the method for applying the sheet-like resin compound include a method of winding an obtained sheet into a roll form and a method of folding it into a zigzag form.

The sheet-like resin compound to at least part of which a load of 0.2 to 50 g/cm² is applied for 1 hour or more refers to a sheet-like resin compound with the same surface or continuous connection including the part to which a load of 0.2 to 50 g/cm² is applied for 1 hour or more.

The method for producing a molded article of the present invention is a method for molding the SMC obtained by the method of production described above. Heating compression molding is preferred as the method of molding from the viewpoint of excellence in productivity and excellence in design versatility.

As the heating compression molding, a method of production is used in which a certain amount of the SMC is weighed, which is put into a mold that has been preheated at 110 to 180°C, the mold is clamped with a compression molding machine to shape a molding material, a molding pressure of 0.1 to 30 MPa is maintained to cure the molding material, and then a molded article is taken out to obtain the molded article, for example. As specific molding conditions, preferred are molding conditions in which a molding pressure of 1 to 20 MPa is maintained for 1 to 5 minutes per 1 mm thickness of the molded article at a mold temperature of 120 to 160°C in the mold, and because of more improved productivity, more preferred are molding conditions in which a molding pressure of 1 to 20 MPa is maintained for 1 to 3 minutes per 1 mm thickness of the molded article at a mold temperature of 140 to 160°C.

The SMC of the present invention has excellent productivity and moldability, and the obtained molded articles can be suitably used for housings and the like of automotive components, railway vehicle components, aerospace vehicle components, ship components, housing equipment components, sports components, light vehicle components, construction and civil engineering components, OA equipment, and the like.

### [Examples]

The following describes the present invention in more detail by means of examples. The present invention is not limited to these examples. For the viscosity, the viscosity was measured using a B-type viscometer ("RB-85H" manufactured by Toki Sangyo Co., Ltd.). The internal temperature of the sheet-like resin compound was measured using an ultrafine coated thermocouple with a terminal core wire of 0.32 mm or less in diameter ("TI-SP-K" manufactured by Toa Electric Inc.). The applied load was measured using a pressure measurement film ("Prescale" manufactured by Fujifilm Corporation).

### (Example 1)

Mixed together with three rolls were 40 parts by mass of an epoxy resin (1) ("tetraglycidyl diaminodiphenyl methane" manufactured by Sigma-Aldrich), 40 parts by mass of an epoxy resin (2) ("EPICLON 840LV" manufactured by DIC Corporation, bisphenol A type), 5 parts by mass of an epoxy diluent ("XY-622" manufactured by Anhui Xinyuan Chemical Co., Ltd., 1,4-butanediol diglycidyl ether), 15 parts by mass of an epoxy diluent ("EX-313" manufactured by Nagase & Co., Ltd., glycerol polyglycidyl ether), 2 parts by mass of an internal mold release agent ("FB-962" manufactured by Daikin Industries, Ltd.), 8 parts by mass of a curing agent for an epoxy resin ("DICY7" manufactured by Mitsubishi Chemical Corporation, dicyandiamide), and 5 parts by mass of a curing accelerator ("B-605-IM" manufactured by DIC Corporation, alkylurea-based), and 9 parts by mass of thermoplastic resin particles ("F303" manufactured by Aica Kogyo Company, Limited, poly(meth)acrylate-based organic fine particles) were mixed therewith to obtain a resin composition (1). The viscosity ratio (V₃₀/V₂₀) of this resin composition (1) was 0.67.

### [Production of SMC]

The resin composition (1) obtained above was applied to a laminate film of polyethylene and polypropylene so as to give an average application amount of 860 g/m², and carbon fibers obtained by cutting carbon fiber roving ("T700SC-12000-50C" manufactured by Toray Industries, Inc.) to 12.5 mm (hereinafter abbreviated as carbon fibers (1)) were uniformly fallen thereon from the air so as to give no fiber directivity, uniform thickness, and a carbon fiber content of 55% by mass, which were held by a film to which the resin composition (1) had been similarly applied to impregnate the carbon fibers (1) with the resin, then a glass plate was placed thereon, and with a load of 0.5 g/cm² applied to the surface of the SMC, which was left at rest at 60°C for 4 hours to obtain an SMC (1). The weight per area of this SMC was 2 kg/m².

### [Evaluation of Impregnability of SMC]

In the sectional direction of the SMC, the SMC was split in two at the midline between a parallel line with respect to the front face and a parallel line with respect to the back face to expose the interior. Next, 30 carbon fiber bundles per 30 cm present on the surface of the exposed interior were randomly taken out, the mass of them was measured, and the average thereof was calculated. This was repeated at areas of five locations to measure a post-impregnation fiber mass. This post-impregnation fiber mass was compared to an unimpregnated fiber mass, and impregnability was evaluated according to the following criteria. The unimpregnated fiber mass was determined by measuring the mass of 1,000 carbon fibers cut to 12.5 mm and taking the average thereof. For the measurement of the mass, an analytical electronic balance GR-202 (manufactured by A&D Company, Limited, with a weighing unit of 0.01 mg) was used.
5: The post-impregnation fiber mass increased by 40% or more compared to the unimpregnated fiber mass.
4: The post-impregnation fiber mass increased by 20% or more and less than 40% compared to the unimpregnated fiber mass.
3: The post-impregnation fiber mass increased by 10% or more and less than 20% compared to the unimpregnated fiber mass.
2: The post-impregnation fiber mass increased by 3% or more and less than 10% compared to the unimpregnated fiber mass.
1: The post-impregnation fiber mass increased by less than 3% compared to the unimpregnated fiber mass or an outflow of only the resin at an SMC sheet end of 30 mm or more.

### [Production of Molded Article]

The SMC (1) obtained above was peeled off from the films and was cut into three 265 mm × 265 mm pieces, which were stacked on each other, were set at the central part of a 30 × 30 cm² flat mold, and were molded at a press mold temperature of 150°C, a press time of 5 minutes, and a press pressure of 12 MPa to obtain a flat molded article (1) with a thickness of 3 mm.

### [Impregnability Evaluation of Molded Article]

Sections of the molded article (1) obtained above were observed using a digital microscope VHX-5000 (manufactured by Keyence Corporation) at a 50-fold magnification, and impregnation was evaluated according to the following criteria. For the observation, sections in two directions, or any one direction and a direction orthogonal thereto, (the sum of a length of 300 mm in the two directions) were observed.
5: Two or less unimpregnated parts
4: Three to four or less unimpregnated parts
3: Five unimpregnated parts
2: Six to 10 unimpregnated parts
1: 11 or more unimpregnated parts

### (Examples 2 to 6)

SMCs (2) to (7) and molded articles (2) to (7) were obtained and were subjected to the evaluations in the same manner as in Example 1 except that the aging step conditions in Table 1 or Table 2 were employed.

### (Comparative Examples 1 to 3)

SMCs (R1) to (R3) and molded articles (R1) to (R3) were obtained and were subjected to the evaluations in the same manner as in Example 1 except that the impregnation conditions in Table 2 were employed.

**[Table 1]**

| Table 1 | | Example 1 | Example 2 | Example 3 | Example 4 | Example 5 |
|---|---|---|---|---|---|---|
| SMC | | (1) | (2) | (3) | (4) | (5) |
| Aging step conditions | Surface applied load (g/cm²) | 0.5 | 0.5 | 12 | 50 | 12 |
| | Temperature (°C) | 60 | 80 | 80 | 80 | 60 |
| | Time (h) | 4 | 3 | 3 | 3 | 4 |
| | SMC internal temperature increase rate (°C/minute) | 2 | 3.5 | 3.5 | 3.5 | 3.5 |
| Impregnability of SMC | | 4 | 5 | 5 | 5 | 5 |
| CF content in SMC (% by mass) | | 55 | 55 | 55 | 55 | 55 |
| Impregnability of molded article | | 5 | 5 | 5 | 5 | 5 |

**[Table 2]**

| Table 2 | | Example 6 | Example 7 | Comparative Example 1 | Comparative Example 2 | Comparative Example 3 |
|---|---|---|---|---|---|---|
| SMC | | (6) | (7) | (R1) | (R2) | (R3) |
| Aging step conditions | Surface applied load (g/cm²) | 12 | 12 | 12 | 130 | 0 |
| | Temperature (°C) | 80 | 60 | 15 | 80 | 80 |
| | Time (h) | 3 | 4 | 24 | 3 | 3 |
| | SMC internal temperature increase rate (°C/minute) | 14 | 14 | 4 | 4 | 4 |
| Impregnability of SMC | | 5 | 4 | 3 | 5 | 3 |
| CF content in SMC (% by mass) | | 55 | 55 | 55 | 42 | 55 |
| Impregnability of molded article | | 5 | 5 | 4 | 5 | 4 |

The sheet molding compounds (SMCs) and the molded articles of the present invention of Examples 1 to 7 were found to have excellent impregnability.

On the other hand, Comparative Example 1, which was an example in which the internal temperature of the SMC in the aging step was lower than 20°C, which is the lower limit of the present invention, revealed insufficient impregnability of the SMC.

Comparative Example 2, which was an example in which the applied load to the SMC in the aging step was larger than 50 g/cm², which is the upper limit of the present invention, could not obtain an SMC having a certain carbon fiber content.

Comparative Example 3, which was an example in which there was no application to the SMC in the aging step, revealed insufficient impregnability of the SMC.

## Claims

1. A method for producing a sheet molding compound including an aging step for thickening a sheet-like resin compound, the method comprising applying a load of 0.2 to 50 g/cm² to at least part of the sheet-like resin compound for 1 hour or more under a condition of an internal temperature of 20 to 120°C in the aging step.

2. The method for producing a sheet molding compound according to claim 1, comprising a step of increasing an internal temperature of the sheet-like resin compound at 1 to 15°C/minute during the aging step.

3. The method for producing a sheet molding compound according to claim 1 or 2, wherein a resin composition as a raw material of the resin compound has a viscosity ratio (V₃₀/V₂₀) between a viscosity V₂₀ (m·Pas) at 20°C and a viscosity V₃₀ (m·Pas) at 30°C of 0.5 to 0.9.

4. A method for producing a molded article obtained by molding a sheet molding compound obtained by the method for producing a sheet molding compound according to any one of claims 1 to 3.
